# EUROPÄISCHE PATENTSCHRIFT

(11) **EP 1 038 387 B1**
(45) Veröffentlichungstag und Bekanntmachung des Hinweises auf die Patenterteilung: **14.11.2001**
(21) Anmeldenummer: 97946722.2
(22) Anmeldetag: 17.12.1997
(51) Int. Cl.: H04M 15/00

(54) **IDENTIFIZIERUNGSKARTE UND VERRECHNUNGSVERFAHREN MIT EINER IDENTIFIZIERUNGSKARTE**
IDENTIFICATION CARD AND BILLING METHOD WITH AN IDENTIFICATION CARD
CARTE D'IDENTIFICATION ET PROCEDE DE FACTURATION AVEC UNE CARTE D'IDENTIFICATION

(43) Veröffentlichungstag der Anmeldung: 27.09.2000
(73) Patentinhaber: Swisscom Mobile AG, 3050 Bern (CH)
(72) Erfinder: RITTER, Rudolf, CH-3052 Zollikofen (CH)
(74) Vertreter: BOVARD AG - Patentanwälte
(86) Internationale Anmeldenummer: CH9700472
(87) Internationale Veröffentlichungsnummer: WO9931868

(56) Entgegenhaltungen:
- EP-A- 0 556 597
- EP-A- 0 656 733
- EP-A- 0 724 371
- WO-A-95/28062
- WO-A-96/11545
- FR-A- 2 680 261
- "GSM: DIGITAL CELLULAR TELECOMMUNICATIONS SYSTEMS (PHASE 2+);SPECIFICATION OF THE SIM APPLICATION TOOLKIT FOR THE SUBSCRIBER IDENTITY MODULE - MOBILE EQUIPMENT (SIM - ME) INTERFACE" GSM TECHNICAL SPECIFICATION,Juli 1997, Seiten 1-5, 07, 09 - 56, XP002064640

## Beschreibung

Die vorliegende Erfindung bezieht sich auf ein Verrechnungsverfahren in einem Telekommunikationssystem. Die Erfindung betrifft insbesondere, aber nicht ausschliesslich, ein Verrechnungsverfahren, das mit einer Identifizierungskarte ausgeführt werden kann, sowie eine entsprechende Identifizierungskarte.

In Telekommunikationsnetzwerken, zum Beispiel in Telekommunikationsnetzwerken nach dem GSM-Standard, hängt der zu verrechnende Anrufbetrag von verschiedenen Parametern ab, insbesondere von der Dauer des Anrufs, von der Tageszeit und u.a. vom geographischen Standort des anrufenden und des angerufenen Teilnehmers. Diese Parameter, insbesondere die Anrufdauer, werden in der Infrastruktur des Netzes, zum Beispiel in einer Zentrale, ermittelt. Aus diesen Parametern wird dann der zu verrechnende Betrag ermittelt und auf einem Konto des Teilnehmers beim Netzbetreiber oder bei einem Finanzinstitut belastet. Dieses Verrechnungsverfahren ist extrem aufwendig und teuer für den Netzbetreiber und verlangt ein komplexes Verrechnungssystem und viele manuelle oder halbautomatische Operationen.

Neben diesen Postpaid-Verrechnungsverfahren sind auch Prepaid-Systeme bekannt. Prepaid-Systeme benutzen meistens eine teilnehmerspezifische Identifizierungskarte, die ein Konto umfasst, welches mit einem Geldbetrag geladen werden kann. Die für die Anrufe des Teilnehmers verrechneten Beträge werden dann nach jedem Anruf auf diesem Konto belastet; verschiedene Verfahren sind bekannt, um das Konto später nachzuladen. Die zur Ermittlung der verrechneten Beträge benötigten Parameter sind unter dem Begriff CAI (Charge Advice Information) bekannt und werden in einem vom Netzbetreiber verwalteten Server ermittelt und mit Signalisierungsmeldungen an die Identifizierungskarte des Teilnehmers übermittelt. Verarbeitungsmittel in der Karte zeigen dann den verrechneten Betrag auf der Anzeige des Mobilgeräts in der lokalen Währung an und belasten diesen Betrag dem gespeicherten Geldbetrag.

In der Patentanmeldung WO 95/28062 werden ein Verfahren und eine SIM-Karte für die Realisierung eines Prepaid-Systems beschrieben. Gemäss der in WO 95/28062 offenbarten Lehre werden sogenannte Charge Advice Informationen ("e"-Parameter) gemäss dem GSM-Standard an ein betreffendes Mobilgerät übertragen und während der Erstellung eines Anrufs vom Mobilgerät an die SIM-Karte weitergeleitet, welche überprüft ob der abgespeicherte vorausbezahlte Betrag für den ankommenden oder ausgehenden Anruf ausreicht. Falls der Betrag ausreicht, werden gemäss WO 95/28062 die Erstellungsprozeduren für den Anruf abgeschlossen und ein Timer der SIM-Karte (oder des Mobilgeräts) zur Messung der Dauer des Anrufs gestartet. Gemäss WO 95/28062 werden aus der gemessenen Dauer des Anrufs sowie basierend auf Tarifinformationen, welche in der SIM-Karte gespeichert sind oder welche mittels weiterer Charge Advice Informationen über das Netzwerk an das Mobilgerät übertragen werden, die Anrufskosten bestimmt und vom vorausbezahlten Betrag abgezogen. Gemäss WO 95/28062 können spezielle Charge Advice Informationen während dem erstellten Anruf periodisch über das Netzwerk an das Mobilgerät übermittelt werden, welche speziellen Charge Advice Informationen durch die SIM-Karte quittiert werden, wenn der vorausbezahlte Betrag immer noch ausreicht um den Anruf fortzuführen.

Prepaid-Verrechnungsverfahren sind günstig für den Netzbetreiber, der keine Rechnung stellen muss. Die Auswertung der zu verrechnenden Beträge muss er jedoch stets durchführen. Ausserdem ist dieses Verfahren im GSM-Umfeld nur mit Geräten und in geographischen Bereichen anwendbar, in welchen die Funktion Advice of Charge (AOC), die im Standard ETSI ETS300 510 (entsprechend der technischen Spezifikation GSM 02.24) definiert ist, angewendet werden kann. Daher erlauben Prepaid-Karten meistens nur sehr eingeschränkte Roamingmöglichkeiten.

Es sind auch Prepaid-Verfahren im Zusammenhang mit Intelligent-Network-Lösungen bekannt. Diese Verfahren sind allerdings teuer einzusetzen und nur im Netz des betreffenden Operators anwendbar.

In der Patentanmeldung WO 96/11545 wird eine Smartcard beschrieben, welche eine Uhr und einen Kalender umfasst, die beide mit einem Mikroprozessor verbunden sind, der seinerseits mit einem Speicher verbunden ist. Gemäss der in WO 96/11545 offenbarten Lehre wird diese Smartcard in eine Teilnehmereinheit eingeführt und eine Teilnehmeridentität sowie eine Gültigkeitszeitperiode, während welcher die Teilnehmereinheit die Teilnehmeridentität zu verwenden hat und die Smartcard nicht mehr verwendet werden kann, an die Teilnehmereinheit kommuniziert.

In der Patentanmeldung EP 724 371 A wird ein Verfahren beschrieben, mittels welchem ein drahtloses Kommunikationsterminal aus mindestens zwei drahtlosen Netzwerken das bevorzugte auswählen kann, wobei typischerweise basierend auf Netzwerktarifinformationen, die in einer zentralisierten Server-Umgebung gespeichert sind, das kostengünstigste Netzwerk gewählt wird.

Es ist folglich ein Ziel der Erfindung ein verbessertes Verrechnungsverfahren vorzuschlagen, welches nicht die Nachteile der bekannten Verfahren aufweist, insbesondere ein für den Netzbetreiber vereinfachtes Verrechnungsverfahren.

Erfindungsgemäss werden diese Ziele mithilfe des im unabhängigen Verfahrenanspruch beschriebenen Verfahrens erreicht, wobei verschiedene Varianten in den abhängigen Ansprüchen beschrieben werden.

Diese Ziele werden ausserdem mithilfe einer im unabhängigen Identifizierungskartenanspruch beschriebenen Identifizierungskarte und mit einem im unabhängigen Systemanspruch beschriebenen System erreicht.

Das erfindungsgemässe Verrechnungsverfahren erfolgt mit einer Identifizierungskarte für Teilnehmer in einem Telekommunikationsnetz, die in wegnehmbarer Weise in ein Endgerät eingeführt werden kann und die ausser konventionellen Datenverarbeitungsmitteln, welche das Speichern von Daten ermöglichen, die mindestens Identifikationsdaten (IMSI (International Mobile Subscriber Identity), MSISDN (Mobile Station Identity Number) oder IDUI (International Debit User Identification)) des Benutzers im Telekommunikationsnetz enthalten, auch mindestens eine Tariftabelle enthält, mit der die zu verrechnenden Beträge aus der Anrufdauer ermittelt werden, sowie eine integrierte Zeitmessvorrichtung, mit der die Dauer des Anrufes ermittelt wird.

Dadurch können alle für die Auswertung des verrechneten Betrags benötigten Parameter direkt auf der Karte ermittelt werden, so dass die Verrechnung direkt an der Quelle beim Teilnehmer erfolgen kann.

Der ermittelte Betrag kann dann entweder direkt auf einem Prepaid-Konto auf der Identifizierungskarte abgebucht werden und/oder in einem Billingbeleg verpackt und an einen Belastungsserver im Telekommunikationsnetz übermittelt werden.

Das Patentdokument EP656733 beschreibt ein Verrechnungssystem für Mobilgeräte, in welchem alle Anrufparameter, die zur Ermittlung des zu verrechnenden Betrags nötig sind, im Speicher des Mobilgeräts gespeichert sind. Dieser Betrag kann dann auf der Anzeige des Mobilgeräts zur Information angezeigt werden. Es ist jedoch in diesem Dokument nicht beschrieben. wie der ermittelte Betrag automatisch belastet werden kann. Ausserdem werden die Anrufdauer und die Anrufzeit mit Hilfe der internen Uhr des Mobilgeräts ermittelt. Der Netzbetreiber hat keinen Einfluss auf die Genauigkeit der Uhren in von anderen Herstellern angebotenen Mobilgeräten. Ausserdem kann in den meisten Mobilgeräten diese Uhr vom Teilnehmer eingestellt werden. Das Patentdokument FR2680261 beschreibt eine Telefon-Chipkarte, die ein Prepaid-Konto sowie Tariftabellen enthält. Die verrechneten Beträge für die Anrufe werden aus dem Prepaid-Konto in Abhängigkeit von der Gesprächsdauer und der gespeicherten Tarife ermittelt. Die Zeit und die Dauer der Anrufe werden jedoch nicht mit einer in der Karte integrierten Uhr ermittelt, sondern in einer externen Vorrichtung.

Eine SIM-Karte mit einer Dauermessvorrichtung ist schon von WO96/11545 bekannt. Diese Karte kann nur während einer in einem Timer in der Karte geladenen Zeit verwendet werden. Dieses Dokument beschreibt jedoch nicht, wie man die zu verrechnenden Beträge automatisch dem Teilnehmer belasten kann.

EP770953 beschreibt eine andere Chipkarte mit integrierter Uhr, die jedoch nur zur Signierung von elektronischen Dokumenten und nicht für die Verrechnung von Anrufen verwendet wird.

Die vorliegende Erfindung wird mithilfe der Beschreibung besser verständlich, welche als Beispiel angeführt ist und durch die Figuren dargestellt wird, wobei:

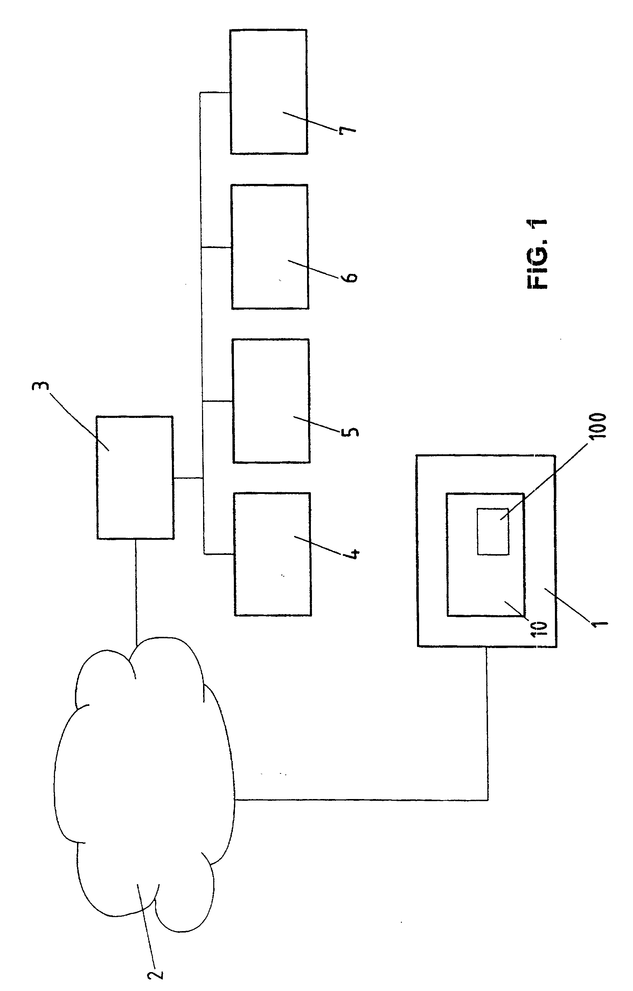

Die Figur 1 ein Blockschema eines erfindungsgemässen Systems zeigt.

Die Figur 2 ein Blockschema einer erfindungsgemässen SIM-Karte zeigt.

Mit dem Bezugszeichen 1 ist ein Endgerät dargestellt, zum Beispiel ein GSM-Mobilfunktelefon, oder ein Computer mit Kommunikationsmöglichkeiten. Das Endgerät 1 enthält eine Identifizierungskarte 10, zum Beispiel eine SIM-Karte 10 (Subscriber Identity Module), die den Benutzer im Telekommunikationsnetz 2 identifiziert. SIM-Karten werden jetzt schon unter anderem in GSM-, DCS-, oder PCS-Mobilgeräten eingesetzt oder auch in zukünftigen Fixnetzen mit Teilnehmeridentifizierung durch Chipkarten. Die SIM-Karte kann entweder eine Full-Size-Karte oder eine Plug-in-Karte sein; sie wird durch ein Kontaktgebiet auf der Oberfläche der Karte mit dem Endgerät 1 verbunden. Andere Kartenformate und kontaktlose Karten können aber auch im Rahmen dieser Erfindung angewendet werden. Die SIM-Karte 10 enthält Datenverarbeitungsmittel, zum Beispiel einen bekannten GSM-SIM-Mikrokontroller. SIM-Karten sind zum Beispiel in der technischen Spezifikation GSM 11.11 und GSM 11.14 beschrieben, die seit 1995 bzw. 1996 beim Sekretariat des European Telecommunications Standards Institute, F-06921 Sophia Antipolis, erhältlich ist. Andere Identifizierungskarten, zum Beispiel Mehrzweckkarten, die unter dem Begriff Opencard bekannt sind, können auch in dieser Erfindung eingesetzt werden.

Die SIM-Karte enthält ausserdem bekannte Mittel, um SMS-Kurzmeldungen (Short Message System) zu senden und zu empfangen, sowie vorzugsweise bekannte Filtermittel, um spezielle Kurzmeldungen zu erkennen und zwischenzuspeichern, vorzugsweise gemäss dem SICAP-Verfahren, das unter anderem im Patent EP 0689 368 B1 beschrieben ist. Vorzugsweise kann die SIM-Karte auch durch USSD-Daten im Signalisierungskanal mit anderen Geräten im Netz 2 kommunizieren. Verschlüsselung und Signierungsmittel sind ausserdem vorzugsweise vorhanden, um empfangene Dateien zu entschlüsseln und gesandte Dateien zu verschlüsseln und zu signieren. Als Verschlüsselungsverfahren kann beispielsweise das TTP-Verfahren (Trusted Third Party) eingesetzt werden, oder auch Verschlüsselungsmittel, die nach einem Point-to-Point-Verfahren arbeiten.

Erfindungsgemäss enthält die SIM-Karte 10 zusätzlich eine integrierte Zeitmessvorrichtung 100, mit der die Dauer der Anrufe ermittelt werden kann. Die Zeitmessvorrichtung kann Hardware- und/oder Software-Mittel enthalten. In einer bevorzugten Variante umfasst jedoch die Zeitmessvorrichtung einen elektronischen Oszillator irgendeines Typs, zum Beispiel einen Quarzoszillator. Vorzugsweise wird der Oszillator 100 durch einen in der Karte 10 enthaltenen Energiespeicher (Akkumulator oder Kondensator zum Beispiel) gespiesen, wenn das Endgerät ausgeschaltet ist.

Die SIM-Karte 10 ist mit einem Telekommunikationsnetz 2, beispielsweise einem GSM-Netz, verbunden, wenn sie im Endgerät 1 steckt. Ein SIM-Server 3 ist ebenfalls an das Netz 2 angeschlossen und kann durch spezielle SMS-Meldungen und/oder durch USSD-Daten (Unstructured Supplementary Service Data) über das Netz 2 kommunizieren. Bekannte Filtermittel im Server 3 und in den SIM-Karten 10 erlauben es, spezielle Dienste, wie den Austausch von Dateien, Instruktionen und Programmen zwischen dem SIM-Server und einer SIM-Karte auszuführen. Vorzugsweise ist ausserdem der SIM-Server 3 mit einem TTP-Server 7 verbunden, um die Kommunikationen mit den SIM-Karten 10 zu verschlüsseln und zu signieren. Dadurch wird versichert, dass die Vertraulichkeit, Authentizität der Identität, Authentizität der Information, Integrität und Nichtabstreitbarkeit des Ursprungs der verschiedenen Mitteilungen gewährleistet sind. Ein Point-to-Point Verschlüsselungs- und Signierungs-Verfahren kann aber auch eingesetzt werden.

Der SIM-Server 3 ist ebenfalls mit einem Zeitkontroller 5 verbunden, der die in der SIM-Karte 10 eingebaute Zeitmessvorrichtung setzt und kontrolliert, wie weiter unten beschrieben wird. Ein Tarif-Server 6 setzt und kontrolliert die in der SIM-Karte eingebaute Tariftabelle. Ein Billing-Collector 4 sammelt die in den SIM-Karten 10 erzeugten Billingbelege, sortiert sie nach Finanzdienstleister und übermittelt sie den entsprechenden Finanzdienstleistern, wie weiter unten beschrieben.

Die Kommunikation zwischen den verschiedenen Servern 3 bis 7 und den SIM-Karten 10 erfolgt, wie schon erwähnt, durch das Telekommunikationsnetz 2, in diesem Beispiel ein GSM-Netz. Die im GSM-System etablierten Roamingmöglichkeiten erlauben dann die Benutzung des erfindungsgemässen Verrechnungsverfahren in allen Netzen, die über ein Roamingabkommen mit dem Heimnetz verfügen. Dieses Verfahren kann dann, wie später erläutert, in allen durch Roamingabkommen verbundenen GSM900-, GSM1800- und auch DCS1900- Einzelnetzen angewendet werden. Die Erfindung kann aber auch mit Nicht-GSM-Netzen angewendet werden.

Die Roaming-Verfahren sind zum Beispiel von I. Brini et al. in "International roaming in digital cellular networks", CSELT Technical reports, Band XX, Nr. 6, Italien, Dezember 1992, S. 531-536, oder von denselben Autoren in "European roaming related technical problems" CSELT Technical reports, Band XX, Nr. 3, Italien, Juni 1992, S. 209-215, beschrieben.

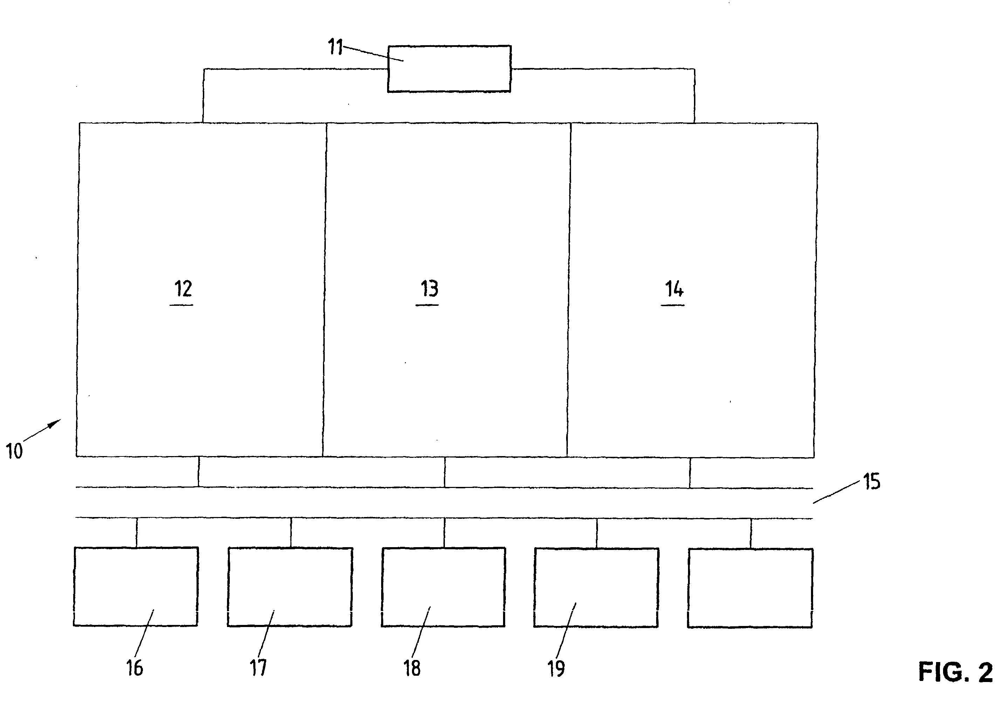

Die Figur 2 zeigt schematisch die Architektur der Identifizierungskarte 10. Die Karte wird, wie schon erwähnt, vorzugsweise durch einen Akkumulator 11 gespiesen. Ein Mikrokontroller mit Datenverarbeitungsmitteln führt die verschiedenen Prozesse in der Karte aus. Ein Speicher, vorzugsweise eine EEPROM, ist im Mikrokontroller enthalten oder mit ihm verbunden. Der Speicher enthält Programme und Dateien, die vorzugsweise in einer hierarchischen Verzeichnisstruktur organisiert sind. Dateien und Ressourcen in diesem Speicher können in drei Bereiche 12, 13, 14 gruppiert werden. Der erste Bereich 12 ist ein Sicherheitsbereich und enthält Dateien und Komponenten, die der Teilnehmer nicht ändern kann. In dieser Gruppe sind, ausser den konventionellen GSM-Daten und - Programmen, zusätzlich noch TTP-Daten und -Programme, sowie mindestens ein privater und/oder mindestens ein öffentlicher Schlüssel enthalten. Erfindungsgemäss sind in diesem Bereich noch Register und Programme, um die eingebaute Zeitmessvorrichtung zu steuern sowie Tariftabellen, Tarifberechnungsprogramme und Belegerstellungsprogramme enthalten.

In diesem ersten Bereich 12 können Daten und Programme nur über einen kryptographischen Prozess geladen beziehungsweise verändert werden. Mit diesem Prozess können auch Java-Programme im Bereich 12 der Karte übertragen werden.

Der zweite Bereich 13 ist nicht gesichert; der Teilnehmer kann auf alle Daten und Programme in diesem Bereich zugreifen. Dieser Bereich enthält ausser einem Telefonbuch, das alle vom Teilnehmer oft angerufene Telefonnummern enthält, zusätzlich noch verschiedene Benutzerprogramme und Daten, beispielsweise fernladbare Java-Programme.

Der dritte optionale Bereich 14 enthält Daten und Programme, die für die direkte kontaktlose Verbindung der SIM-Karte 10 mit externen Geräten zuständig sind. Diese kontaktlose Verbindung kann beispielsweise induktiv durch eine in der Karte oder im Mobilgerät integrierte Spule oder durch eine Infrarot-Schnittstelle im Gehäuse des Mobilgeräts 1 erfolgen.

Die in einem der Bereiche 12, 13 und/oder 14 gespeicherten zusätzlichen Identifizierungsparameter erlauben es, die SIM-Karte 10 auch als Identifizierungskarte für ein anderes System zu benutzen, zum Beispiel als Identifizierungskarte in einem anderen Telekommunikationsnetz 16, für ein externes Gerät 17, in einem Network Computing Gerät NC 18, in einem Mobile Network Computing Gerät MNC 19, oder mit allen anderen denkbaren Geräten, wo eine Teilnehmeridentifizierung mit Chipkarte anwendbar ist. Diese verschiedenen anderen Systeme können mit einem virtuellen SIM-Bus 15 auf die benötigten Identifizierungsparameter in den Bereichen 12, 13, 14 zugreifen. Der Zugriff kann entweder durch eine galvanische Schnittstelle, beispielsweise durch die Kontaktfläche auf der Oberfläche der Karte, oder kontaktlos durch eine der oben erwähnten infraroten oder induktiven Schnittstellen erfolgen.

Wir werden jetzt das mit dieser Identifizierungskarte angewendete Verrechnungsverfahren näher beschreiben.

Wenn die SIM-Karte 10 im Mobilgerät 1 eingeschaltet wird, prüft das Programm zuerst im gesicherten Bereich 12 der Karte, ob die Zeitmessvorrichtung 100 gestellt ist. Wenn das nicht der Fall ist, schickt die Karte 10 eine Zeitabfrage-Meldung an den Zeitkontroller 5, der mit einem Zeitbeleg antwortet. Der Zeitbeleg umfasst eine Zeitangabe und wird vorzugsweise durch den SIM-Server 3 im Nutzkanal durch das Telekommunikationsnetz 2 übertragen, damit die Übertragungszeit möglichst klein gehalten wird. In einer Variante wird der Zeitbeleg als USSD-Meldung durch die Signalisierungsschichten des Kommunikationsprotokolls übertragen. Wegen der unvorhersehbaren Übertragungszeit von SMS-Meldungen werden Zeitbelege jedoch vorzugsweise nicht durch diesen Kanal übertragen.

Übertragungszeitkompensationen können aus statistischen Auswertungen ermittelt und angewendet werden. Der Zeitbeleg ist vorzugsweise durch den TTP-Server 7 elektronisch signiert, damit ein Fälscher keine gefälschten Zeitbelege senden kann, um die gestellte Zeit zu manipulieren. Die SIM-Karte 10 empfängt den signierten Beleg, überprüft die Signatur und setzt, wenn diese korrekt ist, die Zeitmessvorrichtung mit der übermittelten und kompensierten Zeit.

Vorzugsweise werden zusätzlich andere Mechanismen vorgesehen, um die gestellte Zeit in der SIM-Karte 10 zu korrigieren. Beispielsweise kann der Zeitkontroller 5 periodisch die gestellte Zeit überprüfen und falls nötig einen Zeitbeleg zur Korrektur erzeugen. Da, wie später erklärt, die SIM-Karte 10 Billingbelege und/oder CDR (Call Detail Record) erzeugt, die immer eine Zeitangabe umfassen, kann in einer Variante die ermittelte Zeit überprüft werden, damit die Zeitmessvorrichtung 100 nachgestellt werden kann, falls eine Zeitabweichung statistisch festgestellt wird. Wichtig ist auf jeden Fall, dass die Zeitmessvorrichtung 100 ständig mit der Zeit in der aktuellen Zeitzone gestellt wird. Zu diesem Zweck kann beispielsweise vorgesehen werden, dass die Zeitmessvorrichtung nach jedem Einloggen der SIM-Karte 10 in einem neuen Telekommunikationsnetz eingestellt wird. In einer Variante sendet der Zeitkontroller 5 bei jedem Einschalten des Mobilgeräts 1 einen Zeitbeleg an die SIM-Karte 10. In einer anderen Variante bestimmt das Mobilgerät nach jedem Einloggen seinen aktuellen geographischen Standort und macht selber die Zeitzonenkorrektur mithilfe einer in der Karte gespeicherten Zeitzonentabelle.

Parallel zu diesem Verfahren wird beim Einloggen des Mobilgeräts auch überprüft, ob die im Bereich 12 gespeicherte Tariftabelle aktuell und vollständig ist. Zu diesem Zweck wird beim Einloggen im Heimnetz 2 oder in einem besuchten Netz ein Beleg an den Tarifserver 6 im Heimnetz übermittelt, in dem die aktuelle Tariftabellenversion gespeichert ist. Wenn diese Tariftabelle in der SIM-Karte 10 nicht mehr aktuell ist oder wenn sie ergänzt werden muss, wird ein Tarifbeleg vom Tarif-Server 6 erzeugt, durch den TTP-Server 7 TTP-verschlüsselt und signiert, und durch den SIM-Server 3 und das Kommunikationsnetz 2 an die SIM-Karte 10 übermittelt. Die SIM-Karte 10 überprüft dann die Signatur des empfangenen Tarifbelegs und die gespeicherte Tariftabelle wird ergänzt oder angepasst, wenn diese Signatur korrekt ist.

Dieses Tarifübermittlungsverfahren kann auch jedesmal eingesetzt werden, wenn der Netzbetreiber eine Tarifanpassung vornimmt und seine Tariftabellen im Tarif-Server 6 ändert. In diesem Fall kann der Tarifserver automatisch die neuen Tarife an alle seine Abonnenten senden (Initialisieren und Updating der Tariftabellen).

Da die Speicherkapazität der SIM-Karte 10 nicht unbegrenzt ist, wird vorzugsweise kein kompletter Tarifsatz, sondern es werden nur die Tarife für Telekommunikationsnetzbereiche gespeichert, in denen der Teilnehmer statistisch oft telefoniert und optional für einige vordefinierte Telekommunikationsnetzbereiche. Beispielsweise werden in einer neuen Identifizierungskarte nur die Tarife für Anrufe innerhalb seines Heimnetzes, oder nur Tarife für Anrufe zwischen dem Heimnetz und einigen Nachbarnetzen gespeichert. Wenn der Teilnehmer sich dann mit seinem Mobilgerät in einem anderen Netz einloggt, werden gemäss dem oben beschriebenen Mechanismus Tariftabellen für Anrufe aus und in dieses neue Netz in seiner Identifizierungskarte 10 zusätzlich gespeichert.

Benutzerabhängige Discountparameter können mit den gespeicherten Tariftabellen verknüpft werden, damit der Benutzer individuell nach seinem Nutzungsverhalten von entsprechenden Discounts profitieren kann. Discounts können beliebig nach verschiedenen Kriterien eingesetzt werden. Zum Beispiel kann ein Netzbetreiber Discountparameter in SIM-Karten von Arbeitsnehmern in Grossunternehmen programmieren oder auch später nachladen.

Vorzugsweise wird in den weiter unten beschrieben Billingbelegen auch die Tariftabellenversion übertragen, die zur statistischen Nachkontrolle genutzt werden kann. Für den Fall, dass später festgestellt wird, dass die für eine Verrechnung benutzte Version nicht stimmt, wird die aktuelle Tariftabelle gemäss dem oben beschriebenen Mechanismus an die SIM-Karte 10 übermittelt und eine Korrektur durchgeführt.

Wir werden jetzt beschreiben, wie die Verrechnung bei einem Anruf erfolgt.

Bei einem Verbindungsaufbau wird die Anrufnummer durch ein geeignetes Programm im gesicherten Bereich 12 der Identifizierungskarte 10 analysiert. Befinden sich die für den Zielbereich nötigen Tarifwerte in der Tariftabelle auf der Karte 10, wird der Verbindungsaufbau effektiv vollzogen. Wenn die benötigten Tabellenelemente auf der Karte 10 nicht verfügbar sind, wird der Verbindungsaufbau vorzugsweise gesperrt und ein Updatingbeleg an den Tarifserver 6 gesandt, um diese Daten zu laden.

Die zur Auswertung des zu verrechnenden Betrags benötigten Parameter werden nach Signalisierung des Verbindungsaufbaus gesammelt. Der zu verrechnende Betrag ist beispielsweise unter anderem von der Gesprächsdauer, von der Tageszeit, vom Wochentag, vom Standort des anrufenden Teilnehmers und des angerufenen Teilnehmers, von den Tariftabellen und gegebenenfalls von möglichen benutzerspezifischen Discounts abhängig. Alle diese Parameter sind entweder im gesicherten Bereich 12 der Identifizierungskarte 10 vorhanden oder können mit der eingebauten Zeitmessvorrichtung 100 ermittelt werden. Die Auswertung des zu verrechnenden Betrags kann daher nach Ende des Anrufs in Abhängigkeit der mit der Zeitmessvorrichtung ermittelten Dauer dieses Anrufs von einem geeigneten Programm im gesicherten Speicherbereich 12 durchgeführt werden. Dieser Betrag wird dann vorzugsweise auf der Anzeige des Mobilgeräts 1 angezeigt und in einem Billingbeleg verpackt, mit einer TTP-Signatur versehen und durch das Telekommunikationsnetz 2 dem Billing-Collector 4 übertragen. In einer Variante werden dem Billing-Collector statt des auf der Karte ermittelten Betrags die zu dessen Auswertung benötigten Parameter wie Gesprächsdauer, Zeit usw. übermittelt.

Wird die Verbindung so unterbrochen, dass der Billingbeleg nicht übertragen werden kann, wird er im gesicherten Bereich 12 der SIM-Karte gespeichert und beim nächsten Einsatz der Karte 10 dem Billing-Collector 4 zugestellt. Neue Verbindungen werden gesperrt bis der letzte signierte Billingbeleg dem Billing-Collector korrekt übertragen worden ist.

Optional werden die Billingbelege in einem Stack im gesicherten Bereich 12 der Karte abgespeichert. Mehrere Billingbelege werden dann gleichzeitig dem Billing-Collector 4 zugestellt oder bei Bedarf von diesem abgerufen.

Wenn die SIM-Karte 10 eine Prepaid-Karte ist, und einen gespeicherten Geldbetrag enthält, wird der verrechnete Betrag vorzugsweise direkt auf diesem Konto belastet. Prepaid-SIM-Karten werden unter anderem in der Patentanmeldung EP96810570.0 (EP 0 827 119) beschrieben. Billingbelege werden in diesem Fall nur zur Kontrolle und für die Statistik im Billing-Collector 4 verwendet.

Wenn die Karte 10 keine Prepaid-Karte ist, werden die Billingbelege im Billing-Collector 4 nach Finanzdienstleister sortiert und den entsprechenden Finanzdienstleistem übermittelt. Dieser Finanzdienstleister stellt dem Teilnehmer dann eine Rechnung oder belastet sein Konto. Als Finanzdienstleister kommt zum Beispiel der Netzbetreiber selbst in Frage, oder auch eine Bank, ein Kreditkartenunternehmen oder andere Inkassostellen. Da die Billingbelege bereits einen Rechnungsteil repräsentieren, braucht der Netzbetreiber kein eigentliches Billingsystem mehr zu verwalten.

Da alle Elemente für einen Gebührenauszug im Billingbeleg vorhanden sind, können sie dem Teilnehmer zum Beispiel über Internet oder per Post bereitgestellt werden. Billingbelege sind, wie schon erwähnt, TTP-verschlüsselt und signiert, daher ist gesichert, dass nur der berechtigte Teilnehmer auf seinen Gebührenauszug zugreifen kann.

Der Fachmann wird feststellen, das Pre- und Postpaid-Verrechnungsverfahren gemäss der Erfindung parallel im gleichen Telekommunikationssystem eingesetzt werden können.

Parallel zu den auf den SIM-Karten erzeugten Billingbelegen werden vorzugsweise in der Infrastruktur des GSM-Netzes konventionelle CDR (Call Detail Record) erzeugt, die zur Kontrolle der Billingbelege und für weitere Statistiken genutzt werden.

Dieses Verfahren kann nicht nur eingesetzt werden, um Anrufe des Benutzers der SIM-Karte zu verrechnen, sondern auch um die Benutzung von anderen Ressourcen auf der Karte 10 zu verrechnen. Grundsätzlich können mit diesem Verfahren alle Operationen, für die alle Verrechnungsparameter auf der SIM-Karte 10 zur Verfügung stehen, verrechnet werden. Beispielsweise kann auch die Benutzung von im Speicherbereich der Karte gespeicherten Programmen oder von der induktiven oder infraroten Schnittstelle verrechnet werden, zum Beispiel in Abhängigkeit der Dauer der Benutzung.

Dieses Verrechnungsverfahren kann in jedem Netz eingesetzt werden, das mit dem Heimnetz des Teilnehmers durch ein Roamingabkommen verbunden ist. Der Anwendungsbereich ist daher nicht auf ein Heim-GSM-Netz beschränkt; der Einsatz ist global unabhängig von der Netzstruktur in allen Telekommunikationsnetzen möglich und kann auch mit anderen Kommunikationssystemen als mit dem GSM-System verwendet werden.

Dieses Verrechnungsverfahren kann bei mehreren Netzbetreibern eingesetzt werden. In diesem Fall verfügt vorzugsweise jeder Netzbetreiber über seinen eigenen Tarif-Server 6. Die verschiedenen Tarif-Server sind jedoch vorzugsweise miteinander verbunden, so dass Tarifanpassungen international nur einmal durchgeführt werden müssen. In einer Variante sind alle Tariftabellen in einem Master-Tarif-Server gespeichert, auf dem alle Netzbetreiber-spezifischen Tarif-Server zugreifen können, um ihre Tarife zu bestimmen. In einer weiteren Variante greifen alle Netzbetreiber auf denselben, von allen verwalteten Tarif-Server 6 zu. Die Verwaltung der netzspezifischen Tarife im Tarifserver kann von den einzelnen Netzbetreibem über einen kryptographisch gesicherten Prozess vollzogen werden.

Diese Prozesse können nur gesichert und vertraulich angewendet werden, wenn zwischen der SIM-Karte und dem SIM-Server ein verschlüsselter und gesicherter Datenübertragungskanal besteht. Diese Verschlüsselung kann, wie bereits erwähnt, mit TTP-Funktionen oder auch mit Point-to-Point Algorithmen realisiert werden.

## Patentansprüche

1. Verrechnungsverfahren, um einen Anruf eines mit einer Identifizierungskarte (10) identifizierten Teilnehmers in einem Telekommunikationsnetz (2) diesem Teilnehmer zu verrechnen, umfassend:
Ermittlung der Dauer des Anrufs, wobei die Dauer des Anrufs durch eine in der Identifizierungskarte (10) integrierte Zeitmessvorrichtung (100) gemessen wird,
Auswertung des zu verrechnenden Betrags in Abhängigkeit von der ermittelten Anrufdauer und von mindestens einer in der Identifizierungskarte (10) gespeicherten Tariftabelle,
**dadurch gekennzeichnet,**
**dass** ein Zeitkontroller (5) die in der Identifizierungskarte (10) gestellte Zeit überprüft, und, falls die Zeit nicht korrekt gestellt ist, einen Zeitbeleg an diese Identifizierungskarte (10) übermittelt, und
**dass** die zu verrechnenden Beträge von der mit der genannten Zeitmessvorrichtung (100) ermittelten Tageszeit abhängen.

2. Verrechnungsverfahren gemäss dem vorhergehenden Anspruch, **dadurch gekennzeichnet, dass** die Tariftabellen in einem Tarif-Server (6) gespeichert sind und über das genannte Telekommunikationsnetz (2) in die Identifizierungskarte (10) ferngeladen und/oder verändert werden können.

3. Verrechnungsverfahren gemäss dem vorhergehenden Anspruch, **dadurch gekennzeichnet, dass** die Tariftabellen mittels speziellen SMS-Kurzmeldungen aus dem benannten Tarif-Server (6) übermittelt werden können.

4. Verrechnungsverfahren gemäss dem vorhergehenden Anspruch, **dadurch gekennzeichnet, dass** die Tariftabellen mittels USSD-Daten aus dem benannten Tarif-Server (6) übermittelt werden können.

5. Verrechnungsverfahren gemäss einem der Ansprüche 2 bis 4, **dadurch gekennzeichnet, dass** der Tarif-Server (6) nach Einloggen einer Identifizierungskarte (10) in einem Telekommunikationsnetz (2) die Version der in dieser Identifizierungskarte (10) gespeicherten Tariftabelle überprüft, und, falls nötig, die aktuellste Version auf diese Identifizierungskarte lädt.

6. Verrechnungsverfahren gemäss einem der vorhergehenden Ansprüche, **dadurch gekennzeichnet, dass** der Zeitkontroller (5) nach jedem Einloggen einer Identifizierungskarte (10) die gestellte Zeit überprüft, und, falls die Zeit nicht korrekt gestellt ist, einen Zeitbeleg an diese Identifizierungskarte übermittelt.

7. Verrechnungsverfahren gemäss einem der vorhergehenden Ansprüche, **dadurch gekennzeichnet, dass** die übermittelten Zeitbelege elektronisch signiert werden.

8. Verrechnungsverfahren gemäss einem der vorhergehenden Ansprüche, **dadurch gekennzeichnet, dass** nur die Tarife für Telekommunikationsnetzbereiche, in denen der Teilnehmer schon angerufen hat, und optional Tarife für einige vordefinierte Telekommunikationsnetzbereiche in seiner Identifizierungskarte (10) gespeichert sind.

9. Verrechnungsverfahren gemäss einem der Ansprüche 2 bis 8, **dadurch gekennzeichnet, dass** die Übermittlung von Tariftabellen (10) zwischen dem benannten Tarif-Server (6) und den Identifizierungskarten (10) verschlüsselt ist.

10. Verrechnungsverfahren gemäss einem der Ansprüche 2 bis 8, **dadurch gekennzeichnet, dass** die Übermittlung von Tariftabellen (10) zwischen dem benannten Tarif-Server (6) und den Identifizierungskarten (10) signiert ist.

11. Verrechnungsverfahren gemäss einem der vorhergehenden Ansprüche, **dadurch gekennzeichnet, dass** die zu verrechnenden Beträge vom Standort des anrufenden Teilnehmers abhängen.

12. Verrechnungsverfahren gemäss einem der vorhergehenden Ansprüche, **dadurch gekennzeichnet, dass** die zu verrechnenden Beträge vom Standort des angerufenen Teilnehmers abhängen.

13. Verrechnungsverfahren gemäss einem der vorhergehenden Ansprüche, **dadurch gekennzeichnet, dass** die zu verrechnenden Beträge von möglichen Discounts abhängen.

14. Verrechnungsverfahren gemäss einem der vorhergehenden Ansprüche, **dadurch gekennzeichnet, dass** die genannte Zeitmessvorrichtung (100) einen in der Identifizierungskarte (10) integrierten Oszillator umfasst.

15. Verrechnungsverfahren gemäss dem vorhergehenden Anspruch, **dadurch gekennzeichnet, dass** der benannte Oszillator ein Quarzoszillator ist.

16. Verrechnungsverfahren gemäss einem der vorhergehenden Ansprüche, **dadurch gekennzeichnet, dass** die ermittelten Beträge direkt auf einem Prepaid-Konto in der Identifizierungskarte (10) abgebucht werden.

17. Verrechnungsverfahren gemäss einem der vorhergehenden Ansprüche, **dadurch gekennzeichnet, dass** Parameter, von denen die verrechneten Beträge abhängen, in Billingbelege verpackt werden und an einen Billing-Collector (4) im genannten Telekommunikationsnetz (2) zugestellt werden.

18. Verrechnungsverfahren gemäss dem vorhergehenden Anspruch, **dadurch gekennzeichnet, dass** die Billingbelege elektronisch signiert werden.

19. Verrechnungsverfahren gemäss dem vorhergehenden Anspruch, **dadurch gekennzeichnet, dass** die an den Billing-Collector (4) übermittelten Billingbelege sortiert werden und an einen entsprechenden Finanzdienstleister übertragen werden.

20. Verrechnungsverfahren gemäss einem der Ansprüche 17 bis 19, **dadurch gekennzeichnet, dass** parallel zu den Billingbelegen CDR im Telekommunikationsnetz (2) zur Kontrolle erzeugt werden.

21. Verrechnungsverfahren gemäss einem der vorhergehenden Ansprüche, **dadurch gekennzeichnet, dass** auch die Benutzung von nicht für die Verkehrsabwicklung zuständigen Ressourcen in der Identifizierungskarte (10) in Abhängigkeit von gespeicherten Tariftabellen und der benannten Zeitmessvorrichtung verrechnet wird.

22. Identifizierungskarte (10) für Teilnehmer in einem Telekommunikationsnetz, die in wegnehmbarer Weise in ein Endgerät (1) eingeführt werden kann, enthaltend:
Datenverarbeitungsmittel, welche das Speichern von Daten ermöglichen, die mindestens Identifikationsdaten des Teilnehmers im Telekommunikationsnetz (2) enthalten,
mindestens eine Tariftabelle, wobei die zu verrechnenden Beträge in Abhängigkeit von der ermittelten Anrufdauer und von dieser Tariftabelle ermittelt werden,
eine integrierte Zeitmessvorrichtung (100), mit der die Dauer der Anrufe ermittelt wird, **dadurch gekennzeichnet,**
**dass** die Identifizierungskarte (10) Mittel umfasst, um von einem Zeitkontroller (5) an die Identifizierungskarte (10) übermittelte Zeitbelege, welche Zeitangaben umfassen, zu empfangen und die Zeitmessvorrichtung (100) mit der übermittelten Zeit zu setzen, und
**dass** Register und Programme zur Steuerung der Zeitmessvorrichtung (100) in einem dem Teilnehmer nicht zugänglichen Bereich (12) der Identifizierungskarte (10) gespeichert sind.

23. Identifizierungskarte (10) gemäss dem vorhergehenden Anspruch, **dadurch gekennzeichnet, dass** mindestens eine Tariftabelle im EEPROM der Identifizierungskarte (10) gespeichert ist, und aus einem Tarif-Server (6) im benannten Telekommunikationsnetz (2) femgeladen und/oder verändert werden kann.

24. Identifizierungskarte (10) gemäss dem vorhergehenden Anspruch, **dadurch gekennzeichnet, dass** sie Tariftabellen in speziellen SMS-Kurzmeldungen erkennen und laden kann.

25. Identifizierungskarte (10) gemäss Anspruch 23, **dadurch gekennzeichnet, dass** sie Tariftabellen in USSD-Daten erkennen und laden kann.

26. Identifizierungskarte (10) gemäss einem der Ansprüche 22 bis 25, **dadurch gekennzeichnet, dass** nur die Tarife für Telekommunikationsnetzbereiche, in denen der Teilnehmer schon angerufen hat, und optional Tarife für einige vordefinierte Telekommunikationsnetzbereiche, gespeichert sind.

27. Identifizierungskarte (10) gemäss einem der Ansprüche 22 bis 26, **dadurch gekennzeichnet, dass** sie ausserdem TTP-Entschlüsselungsmittel enthält, um empfangene Tariftabellen zu entschlüsseln.

28. Identifizierungskarte (10) gemäss einem der Ansprüche 22 bis 27, **dadurch gekennzeichnet, dass** die benannte Zeitmessvorrichtung (100) einen in der Identifizierungskarte (10) integrierten Oszillator umfasst.

29. Identifizierungskarte (10) gemäss der vorhergehenden Anspruch, **dadurch gekennzeichnet, dass** der benannte Oszillator ein Quarzoszillator ist.

30. Identifizierungskarte (10) gemäss einem der Ansprüche 22 bis 29, **dadurch gekennzeichnet, dass** sie ein Prepaid-Konto enthält, auf dem die verrechneten Beträge direkt abgebucht werden.

31. Identifizierungskarte (10) gemäss einem der Ansprüche 22 bis 30, **dadurch gekennzeichnet, dass** sie Mittel enthält, um die zu verrechnenden Beträge in Billingbelege zu verpacken und einem Billing-Collector (4) in dem genannten Telekommunikationsnetz (2) zuzustellen.

32. Identifizierungskarte (10) gemäss einem der Ansprüche 22 bis 31, **dadurch gekennzeichnet, dass** parallel zu den Billingbelegen CDRs im roamingfähigen Telekommunikationsnetz (2) zur Kontrolle erzeugt werden.

33. Identifizierungskarte (10) gemäss einem der Ansprüche 22 bis 32, **dadurch gekennzeichnet, dass** sie Mittel enthält, um auch die Benutzung von nicht für die Verkehrsabwicklung zuständigen Ressourcen in der Identifizierungskarte in Abhängigkeit von den benannten Tariftabellen und von der benannten Zeitmessvorrichtung (100) zu verrechnen.

34. Identifizierungskarte (10) gemäss einem der Ansprüche 22 bis 33, **dadurch gekennzeichnet, dass** sie ausserdem einen Energiespeicher (11) enthält, der die Zeitmessvorrichtung (100) speist.

35. Telekommunikationssystem, in dem die Teilnehmer mit einer Identifizierungskarte (10) identifiziert werden, mit einer Vielzahl von Endgeräten (1), in denen Identifizierungskarten (10) in wegnehmbarer Weise eingeführt werden können, wobei mindestens gewisse Identifizierungskarten (10) mindestens eine Tariftabelle enthalten, wobei mindestens gewisse Identifizierungskarten (10) ausserdem eine integrierte Zeitmessvorrichtung (100) enthalten, mit der die Dauer der Anrufe ermittelt wird, und wobei die verrechneten Beträge für mindestens gewisse Anrufe dieser Teilnehmer in Abhängigkeit dieser ermittelten Dauer und der benannten Tariftabelle ermittelt werden, **dadurch gekennzeichnet,**
**dass** es ausserdem einen Zeitkontroller (5) enthält, mit welchem die Zeit in den in den Identifizierungskarten (10) integrierten Zeitmessvorrichtungen (100) eingestellt werden kann, wobei die im Zeitkontroller (5) ermittelte Zeit mit Zeitbelegen an die Identifizierungskarten (10) übermittelt wird.

36. Telekommunikationssystem gemäss dem vorhergehenden Anspruch, **dadurch gekennzeichnet, dass** es ausserdem einen Tarif-Server (6) enthält, in dem die Tariftabellen gespeichert sind, sowie einen SIM-Server (3), mit welchem die Tariftabellen über das benannte Telekommunikationsnetz (2) in den Identifizierungskarten (10) ferngeladen werden können.

37. Telekommunikationssystem gemäss einem der Ansprüche 35 bis 36, **dadurch gekennzeichnet, dass** es ausserdem einen TTP-Server (7) enthält, mit welchem Datenübermittlungen mit den Identifizierungskarten (10) signiert und verschlüsselt werden können.

38. Telekommunikationssystem gemäss einem der Ansprüche 35 bis 37, **dadurch gekennzeichnet, dass** es ausserdem einen Billing-Collector (4) enthält, der die von den verschiedenen Identifizierungskarten (10) erzeugten Billingbelege sammelt.

39. Telekommunikationssystem gemäss dem vorhergehenden Anspruch, **dadurch gekennzeichnet, dass** der benannte Billing-Collector (4) die empfangenen Billingbelege nach Finanzdienstleister sortiert und den entsprechenden Finanzdienstleistern übermittelt.

## Claims

1. Billing method for billing a call by a subscriber identified with an identification card (10) in a telecommunications network (2) to this subscriber, comprising:
determination of the duration of the call, the duration of the call being measured by a time-measuring device (100) integrated into the identification card (10),
determination of the amount to be billed based upon the determined call duration and at least one tariff table stored in the identification card (10),
**characterised in that**
a time controller (5) checks the time set in the identification card (10), and, if the time is not set correctly, transmits a time record to this identification card (10), and
the amounts to be billed depend upon the time of day determined by said time-measuring device (100).

2. Billing method according to the preceding claim, **characterised in that** the tariff tables are stored in a tariff server (6), and can be remotely loaded into the identification card (10) and/or changed through said telecommunications network (2).

3. Billing method according to the preceding claim, **characterised in that** the tariff tables can be communicated from said tariff server (6) by means of special SMS short messages.

4. Billing method according to the preceding claim, **characterised in that** the tariff tables can be communicated from said tariff server (6) by means of USSD data.

5. Billing method according to one of the claims 2 to 4, **characterised in that** after an identification card (10) has been logged into a telecommunications network (2) the tariff server (6) checks the version of the tariff table stored in this identification card (10), and, if necessary, loads the most recent version onto this identification card.

6. Billing method according to one of the preceding claims, **characterised in that**, after each logging in of an identification card (10), the time controller (5) checks the time set, and, if the time is not set correctly, transmits a time record to this identification card.

7. Billing method according to one of the preceding claims, **characterised in that** the transmitted time records are electronically signed.

8. Billing method according to one of the preceding claims, **characterised in that** stored in the identification card (10) of the subscriber are only the tariffs for areas of the telecommunications network in which he has already called and optionally tariffs for some pre-defined areas of the telecommunications network.

9. Billing method according to one of the claims 2 to 8, **characterised in that** the transmission of tariff tables (10) between said tariff server (6) and the identification card (10) is encrypted.

10. Billing method according to one of the claims 2 to 8, **characterised in that** the transmission of tariff tables (10) between said tariff server (6) and the identification card (10) is signed.

11. Billing method according to one of the preceding claims, **characterised in that** the amounts to be billed depend upon the location of the calling subscriber.

12. Billing method according to one of the preceding claims, **characterised in that** the amounts to be billed depend upon the location of the subscriber being called.

13. Billing method according to one of the preceding claims, **characterised in that** the amounts to be billed depend upon possible discounts.

14. Billing method according to one of the preceding claims, **characterised in that** said time-measuring device (100) comprises an oscillator integrated into the identification card (10).

15. Billing method according to the preceding claim, **characterised in that** said oscillator is a quartz oscillator.

16. Billing method according to one of the preceding claims, **characterised in that** the determined amounts are debited directly against a prepaid account in the identification card (10).

17. Billing method according to one of the preceding claims, **characterised in that** parameters upon which the billed amounts depend, are packed in billing records and are delivered to a billing collector (4) in said telecommunications network (2).

18. Billing method according to the preceding claim, **characterised in that** the billing records are electronically signed.

19. Billing method according to the preceding claim, **characterised in that** the billing records transmitted to the billing collector (4) are sorted, and are transmitted to a corresponding financial services provider.

20. Billing method according to one of the claims 17 to 19, **characterised in that** call detail records (CDRs) are generated in the telecommunications network (2), parallel to the billing records, as a check.

21. Billing method according to one of the preceding claims, **characterised in that** the use of resources not responsible for the traffic/communication processing are also billed in the identification card (10) on the basis of the stored tariff tables and said time-measuring device.

22. Identification card (10) for subscribers in a telecommunications network, which can be inserted in a terminal (1) in a removable way, containing:
data processing means, which make possible the storage of data containing at least identification data of the subscriber in the telecommunications network (2),
at least one tariff table, the amounts to be billed being determined on the basis of the determined call duration and this tariff table,
an integrated time measuring device (100), with which the duration of the calls is determined, **characterised in that**
the identification card (10) comprises means to receive time records, comprising time indications, transmitted to the identification card (10) by a time controller (5), and to set the time measuring device (100) with the transmitted time, and
registers and programs for control of the time-measuring device (100) are stored in an area (12) of the identification card (10) not accessible to the subscriber.

23. Identification card (10) according to the preceding claim, **characterised in that** at least one tariff table is stored in the EEPROM of the identification card (10), and can be remotely loaded from a tariff server (6) in the telecommunications network (2) and/or changed.

24. Identification card (10) according to the preceding claim, **characterised in that** it can recognize and load tariff tables in special SMS short messages.

25. Identification card (10) according to claim 23, **characterised in that** it can recognize and load tariff tables in USSD data.

26. Identification card (10) according to one of the claims 22 to 25, **characterised in that** stored are only the tariffs for areas of the telecommunications network in which the subscriber has already called and optionally tariffs for some predefined areas of the telecommunications network.

27. Identification card (10) according to one of the claims 22 to 26, **characterised in that** it further contains TTP-decryption means in order to decrypt received tariff tables.

28. Identification card (10) according to one of the claims 22 to 27, **characterised in that** said time-measuring device (100) comprises an oscillator integrated into the identification card (10).

29. Identification card (10) according to the preceding claim, **characterised in that** said oscillator is a quartz oscillator.

30. Identification card (10) according to one of the claims 22 to 29, **characterised in that** it contains a prepaid account, against which the billed amounts are debited directly.

31. Identification card (10) according to one of the claims 22 to 30, **characterised in that** it contains means to pack the amounts to be billed in billing records and to send them to a billing collector (4) in said telecommunications network (2).

32. Identification card (10) according to one of the claims 22 to 31, **characterised in that** call detail records (CDRs) are generated as a check, parallel to the billing records, in the telecommunications network (2), capable of roaming.

33. Identification card (10) according to one of the claims 22 to 32, **characterised in that** it contains means to bill in the identification card, on the basis of said tariff tables and said time-measuring device (100), also the use of resources not responsible for traffic/communication processing.

34. Identification card (10) according to one of the claims 22 to 33, **characterised in that** it further comprises an energy store (11) which supplies the time-measuring device (100).

35. Telecommunications system in which the subscribers are identified with an identification card (10), with a multiplicity of terminal devices (1) in which identification cards (10) can be removably inserted, at least certain identification cards (10) having at least one tariff table, whereby at least certain identification cards (10) further contain an integrated time-measuring device (100), with which the duration of calls is determined, and whereby the billed amounts are determined for at least certain calls of these subscribers on the basis of said determined duration and said tariff tables, **characterised in that**
it further contains a time controller (5) with which the time can be set in the time-measuring devices (100) integrated into the identification cards (10), the time determined in the time controller (5) being communicated to the identification cards (10) with time records.

36. Telecommunications system according to the preceding claim, **characterised in that** it further comprises a tariff server (6) in which the tariff tables are stored, as well as an SIM server (3), with which the tariff tables can be remotely loaded into the identification cards (10) through said telecommunications network (2).

37. Telecommunications system according to one of the claims 35 to 36, **characterised in that** it further contains a TTP server (7) with which data transfers with the identification cards (10) can be signed and encrypted.

38. Telecommunications system according to one of the claims 35 to 37, **characterised in that** it further contains a billing collector (4) which collects the billing records generated by the various identification cards (10).

39. Telecommunications system according to the preceding claim, **characterised in that** the said billing collector (4) sorts the received billing records according to financial services provider and transmits them to the corresponding financial services provider.

## Revendications

1. Procédé d'imputation servant à facturer à un abonné identifié par une carte d'identification (10), dans un réseau de télécommunications (2), une communication que cet abonné a établie, procédé comprenant :
la détermination de la durée de la communication, cette durée étant mesurée par un dispositif chronométrique (100) intégré à la carte d'identification (10),
l'exploitation du montant à facturer en fonction de la durée de la communication déterminée et d' au moins un tableau des tarifs enregistré dans la carte d'identification (10),
**caractérisé en ce qu'**un contrôleur de temps (5) vérifie le temps inscrit dans la carte d'identification (10) et, dans le cas où ce temps n'est pas inscrit correctement, envoie un justificatif de temps à cette carte d'identification (10), et
**en ce que** les montants à facturer dépendent de l'heure de la journée qui a été déterminée par le dispositif chronométrique (100) mentionné.

2. Procédé d'imputation selon la revendication précédente, **caractérisé en ce qu caractérisé en ce que** les tableaux des tarifs sont enregistrés dans un serveur de tarifs (6) et peuvent être téléchargés ou modifiés, ou les deux, dans la carte d'identification (10) mentionnée, par l'intermédiaire du réseau de télécommunications (2) mentionné.

3. Procédé d'imputation selon la revendication précédente, **caractérisé en ce que** les tableaux des tarifs peuvent être transmis, depuis le serveur de tarifs (6) mentionné, au moyen de messages courts SMS spéciaux.

4. Procédé d'imputation selon la revendication précédente, **caractérisé en ce qu'**il est possible de transmettre au moyen de données USSD les tableaux des tarifs provenant du serveur de tarifs (6) mentionné.

5. Procédé d'imputation selon l'une des revendications 2 à 4, **caractérisé en ce que**, après la connexion d'une carte d'identification (10) dans un réseau de télécommunications (2), le serveur de tarifs (6) vérifie la version du tableau des tarifs qui est enregistrée dans cette carte d'identification (10) et, si nécessaire, charge la version la plus récente sur ladite carte d'identification.

6. Procédé d'imputation selon l'une des revendications précédentes, **caractérisé en ce que** le contrôleur de temps (5) vérifie le temps inscrit après chaque connexion d'une carte d'identification (10) et, dans le cas où ce temps n'est pas inscrit correctement, envoie un justificatif de temps à cette carte d'identification.

7. Procédé d'imputation selon l'une des revendications précédentes, **caractérisé en ce que** les justificatifs de temps envoyés sont signés électroniquement.

8. Procédé d'imputation selon l'une des revendications précédentes, **caractérisé en ce que** ne sont enregistrés dans la carte d'identification (10) de l'abonné que les tarifs correspondant à des secteurs du réseau de télécommunications dans lesquels cet abonné a déjà appelé et, en option, des tarifs correspondant à quelques secteurs déterminés du réseau de télécommunications.

9. Procédé d'imputation selon l'une des revendications 2 à 8, **caractérisé en ce que** la transmission de tableaux des tarifs entre le serveur de tarifs (6) mentionné et les cartes d'identification (10) est cryptée.

10. Procédé d'imputation selon l'une des revendications 2 à 8, **caractérisé en ce que** la transmission de tableaux des tarifs entre le serveur de tarifs (6) mentionné et les cartes d'identification (10) se fait avec signature.

11. Procédé d'imputation selon l'une des revendications précédentes, **caractérisé en ce que** les montants à facturer dépendent du lieu où se trouve l'abonné qui appelle.

12. Procédé d'imputation selon l'une des revendications précédentes, **caractérisé en ce que** les montants à facturer dépendent du lieu où se trouve l'abonné appelé.

13. Procédé d'imputation selon l'une des revendications précédentes, **caractérisé en ce que** les montants à facturer dépendent de remises éventuelles.

14. Procédé d'imputation selon l'une des revendications précédentes, **caractérisé en ce que** le dispositif chronométrique (100) mentionné comprend un oscillateur intégré à la carte d'identification (10).

15. Procédé d'imputation selon la revendication précédente, **caractérisé en ce que** l'oscillateur mentionné est un oscillateur à quartz.

16. Procédé d'imputation selon l'une des revendications précédentes, **caractérisé en ce que** les montants déterminés sont prélevés directement sur un compte prépayé, sur la carte d'identification (10).

17. Procédé d'imputation selon l'une des revendications précédentes, **caractérisé en ce que** les paramètres dont dépendent les montants facturés sont condensés dans des justificatifs de facturation et transmis à un collecteur de facturation (4) dans les réseau de télécommunications (2) mentionné.

18. Procédé d'imputation selon la revendication précédente, **caractérisé en ce que** les justificatifs de facturation sont signés électroniquement.

19. Procédé d'imputation selon la revendication précédente, **caractérisé en ce que** les justificatifs de facturation transmis au collecteur de facturation (4) sont triés et transmis à un prestataire de services financiers approprié.

20. Procédé d'imputation selon l'une des revendications 17 à 19, **caractérisé en ce que**, parallèlement aux justificatifs de facturation, des CDR sont créés dans le réseau de télécommunications (2) aux fins de contrôle.

21. Procédé de facturation selon l'une des revendications précédentes, **caractérisé en ce que** l'utilisation de ressources ne correspondant pas à l'écoulement du trafic est également facturée dans la carte d'identification (10) en fonction de tableaux des tarifs enregistrés et du dispositif chronométrique mentionné.

22. Carte d'identification (10) destinée aux abonnés d'un réseau de télécommunications, pouvant être introduite de façon amovible dans un terminal (1) et contenant :
des moyens de traitement des données qui permettent la mise en mémoire de données comprenant au moins des données d' identification de l'abonné dans le réseau de télécommunications (2),
au moins un tableau des tarifs, les montants à facturer étant déterminés en fonction de la durée déterminée des communications et de ce tableau des tarifs,
un dispositif chronométrique (100) intégré au moyen duquel on détermine la durée des communications, **caractérisée en ce que**
cette carte d'identification (10) est pourvue de moyens lui permettant de recevoir des justificatifs de temps envoyés par un contrôleur de temps (5) à la carte d'identification (10) et comprenant des indications de temps, et de régler le dispositif chronométrique (100) avec le temps transmis, et
que des registres et des programmes de commande du dispositif chronométrique (100) sont enregistrés dans une partie (12) de la carte d'identification (10) qui n'est pas accessible à l'abonné.

23. Carte d'identification (10) selon la revendication précédente, **caractérisée en ce qu'**au moins un tableau des tarifs est enregistré dans l'EEPROM de la carte d'identification (10) et peut être téléchargé ou modifié, ou les deux, depuis un serveur de tarifs (6) se trouvant dans le réseau de télécommunications (2) mentionné.

24. Carte d'identification (10) selon la revendication précédente, **caractérisée en ce qu'**elle est en mesure de reconnaître et de charger des tableaux des tarifs dans des messages courts SMS spéciaux.

25. Carte d'identification (10) selon la revendication 23, **caractérisée en ce qu'**elle est en mesure de reconnaître et de charger des tableaux des tarifs dans des données USSD.

26. Carte d'identification (10) selon l'une des revendications 22 à 25, **caractérisée en ce que** seuls sont enregistrés les tarifs applicables aux secteurs du réseau de télécommunications dans lesquels l'abonné a déjà téléphoné et, en option, des tarifs pour quelques secteurs déterminés du réseau de télécommunications.

27. Carte d'identification (10) selon l'une des revendications 22 à 26, **caractérisée en ce qu'**elle comporte en outre des moyens de décodage TTP (du tiers habilité) pour déchiffrer les tableaux des tarifs reçus.

28. Carte d'identification (10) selon l'une des revendications 22 à 27, **caractérisée en ce que** le dispositif chronométrique (100) mentionné comprend un oscillateur intégré à la carte d'identification (10).

29. Carte d'identification (10) selon la revendication précédente, **caractérisée en ce que** l'oscillateur mentionné est un oscillateur à quartz.

30. Carte d'identification (10) selon l'une des revendications 22 à 29, **caractérisée en ce qu'**elle comporte un compte prépayé auquel les montants facturés sont débités directement.

31. Carte d'identification (10) selon l'une des revendications 22 à 30, **caractérisée en ce qu'**elle comporte des moyens permettant de condenser les montants à facturer dans des justificatifs de facturation et de les transmettre à un collecteur de facturation (4) dans le réseau de télécommunications (2) mentionné.

32. Carte d'identification (10) selon l'une des revendications 22 à 31, **caractérisée en ce que**, parallèlement aux justificatifs de facturation, des CDR sont créés, aux fins de contrôle, dans le réseau de télécommunications (2), qui permet le déplacement.

33. Carte d'identification (10) selon l'une des revendications 22 à 32, **caractérisée en ce qu'**elle possède des moyens servant à facturer aussi, dans cette carte d'identification, l'utilisation de ressources ne correspondant pas à l'écoulement du trafic, en fonction des tableaux des tarifs mentionnés et du dispositif chronométrique (100) mentionné.

34. Carte d'identification (10) selon l'une des revendications 22 à 33, **caractérisée en ce qu'**elle possède en outre une réserve d'énergie (11) qui alimente le dispositif chronométrique (100).

35. Système de télécommunications dans lequel les abonnés sont identifiés au moyen d'une carte d'identification (10), et comportant un grand nombre de terminaux (1) dans lesquels on peut intoduire des cartes d'identification (10) de manière amovible, au moins certaines cartes d'identification (10) contenant au moins un tableau des tarifs, au moins certaines cartes d'identification (10) posédant en outre un dispositif chronométrique (100) intégré qui détermine la durée des appels, et les montants facturés étant déterminés, au moins pour certains appels de ces abonnés, en fonction de la durée ainsi déterminée et du tableau des tarifs mentionné, **caractérisé en ce qu'**il
est équipé en outre d'un contrôleur de temps (5) qui permet de régler le temps dans les dispositifs chronométriques (100) intégrés aux cartes d'identification (10), le temps déterminé dans le contrôleur de temps (5) étant transmis, avec des justificatifs de temps, aux cartes d'identification (10).

36. Système de télécommunications selon la revendication précédente, **caractérisé en ce qu'**il est équipé en outre d'un serveur de tarifs (6) dans lequel les tableaux des tarifs sont enregistrés, ainsi que d'un serveur SIM (3) au moyen duquel on peut télécharger les tableaux des tarifs dans les cartes d'identification (10), par l'intermédiaire du réseau de télécommunications (2) mentionné.

37. Système de télécommunications selon la revendication 35 ou 36, **caractérisé en ce qu'**il est équipé en outre d'un serveur TTP (7) (du tiers habilité) qui permet de signer et de coder des transmissions de données avec les cartes d'identification (10).

38. Système de télécommunications selon l'une des revendications 35 à 37, **caractérisé en ce qu'**il est équipé en outre d'un collecteur de facturation (4) qui rassemble les justificatifs de facturation établis par les différentes cartes d'identification (10).

39. Système de télécommunications selon la revendication précédente, **caractérisé en ce que** le collecteur de facturation (4) mentionné trie les justificatifs de facturation reçus en fonction des prestataires de services financiers et les transmet aux prestataires de services financiers voulus.
